# EUROPÄISCHE PATENTANMELDUNG

(11) **EP 4 803 036 A1**
(43) Veröffentlichungstag der Anmeldung: **09.09.2026**
(21) Anmeldenummer: 26150533.3
(22) Anmeldetag: 07.01.2026
(51) Int. Cl.: A61C 15/04

(54) **VERFAHREN ZUM BESPANNEN EINER ZAHNSEIDEVORRICHTUNG UND ZAHNSEIDEVORRICHTUNG**

(30) Priorität: 05.03.2025 DE 102025108256
(71) Anmelder: welumo UG (haftungsbeschränkt), 97834 Birkenfeld (DE)
(72) Erfinder: KONRAD, Christopher, 70499 Stuttgart (DE)
(74) Vertreter: Sebastian, Jens

(57) **Zusammenfassung**

Der Gegenstand der vorliegenden Erfindung betrifft ein Verfahren zum Bespannen einer Zahnseidevorrichtung (1), insbesondere eines Zahnseidesticks (10) einer Zahnseidevorrichtung (1), mit Zahnseide (20), insbesondere einer Zahnseidevorrichtung (1) nach einem der Ansprüche 6 bis 15, umfassend die Schritte: Vorsehen eines Zahnseidespenders (30), insbesondere eines mit Zahnseide (20) gefüllten Zahnseidespenders (30), Vorsehen eines zum Führen von Zahnseide (20) geeigneten Zahnseidesticks (10), Führen der Zahnseide (20) aus dem Zahnseidespender (30) um den Zahnseidestick (10), Klemmen und/oder Spannen der Zahnseide (20) an dem Zahnseidestick (10) und Zuschneiden der Zahnseide (20), sodass die Zahnseide (20) mit dem Zahnseidestick (10) getrennt von dem Zahnseidespender (30) verwendbar ist, wobei der Zahnseidestick (10) vor dem Führen der Zahnseide (20) mit dem Zahnseidespender (30) lösbar, insbesondere sicherungsmittelfrei lösbar verbunden wird, insbesondere über eine Steckverbindung verbunden wird, und für eine Verwendung des Zahnseidesticks (10) mit der geklemmten Zahnseide (20) der Zahnseidestick (10), insbesondere nach dem Klemmen, insbesondere vor dem Zuschneiden, von dem Zahnseidespender (30) gelöst wird. Zudem betrifft die Erfindung eine Vorrichtung hierzu.

## Beschreibung

Die Erfindung betrifft ein Verfahren zum Bespannen einer Zahnseidevorrichtung gemäß Anspruch 1.

Nicht zuletzt betrifft die Erfindung eine Zahnseidevorrichtung zum Reinigen von Zahnzwischenräumen gemäß Anspruch 6.

Vorrichtungen und Methoden zur Reinigung von Zähnen, insbesondere von Zahnzwischenräumen, wie beispielsweise Zahnseide, Zahnzwischenraumbürsten und dergleichen sind allgemein bekannt. Allerdings ist zum Beispiel Zahnseide recht schwer für einen Benutzer zu handhaben. Für eine bessere Handhabung der Zahnseide für ein Reinigen der Zahnzwischenräume sind beispielsweise Zahnseide-Applikationen bekannt.

Aus der DE 20 2006 007 120 U1 ist beispielsweise eine Appliziereinrichtung für Zahnseide bekannt, mit einem Gehäuse, das gebildet ist aus zwei Abdeckschalen, wobei das Gehäuse eine Durchgangsöffnung und eine zurückgesetzte Kammer aufweist, einem Stab der Zahnseide, wobei der Stab der Zahnseide eine Hinterseite aufweist, die an einer Vorderseite des Gehäuses befestigt ist, wobei eine Vorderseite ausgebildet ist um eine Länge einer Zahnseide in einen gespannten Zustand zu halten und eine Seidennut zum Führen einer Zahnseide über die Vorderseite des Stabs der Zahnseide, einem Aufnahmerad, das schwenkbar in der Durchgangsöffnung des Gehäuses angebracht und mit einer Welle befestigt ist, um ein Ende einer Zahnseide zu sichern und die gesicherte Zahnseide aufzunehmen, einer Seidenspule, die drehbar gehalten ist auf der ersten Welle, wobei die Seidenspule ein Zahnrad aufweist, das fest an einer Seite davon vorgesehen ist, und die Seidenspule eine Zahnseide aufwickelt, die ein Ende aufweist, das sich durch die Seidennut erstreckt über die Vorderseite des Stabs für Zahnseide und verbunden ist mit dem Aufnahmerad, einem Federgestell, das in dem Gehäuse angebracht ist, wobei das Federgestell einen Druckabschnitt aufweist, der sich aus dem Gehäuse erstreckt, um von dem Nutzer gedrückt zu werden, einen Anschlagsabschnitt, der in dem Gehäuse aufgehängt ist, wobei der Anschlagsabschnitt eine Anlagefläche aufweist, die mit dem Zahnrad zusammenwirkt, eine Aufnahmekammer, ein Federelement, das in der Aufnahmekammer angebracht ist und gestoppt wird zwischen einer Seitenwand der Aufnahmekammer und einem Teil des Gehäuses und einer Durchgangsöffnung, einem drehbaren Knopf, der in der zurückgesetzten Kammer des Gehäuses angebracht ist, wobei der drehbare Knopf einen Schaft aufweist, der durch die Durchgangsöffnung des Federgestells eingeführt ist und mit der Welle verbunden ist, um das Aufnahmerad zu drehen und einer Reihe von geneigten Zähnen, die sich um deren inneren Umfang erstrecken, und einer federnden Ausklinkung, die auf dem des drehbaren Knopfs in der zurückgesetzten Kammer des Gehäuses angebracht ist, wobei die federnde Ausklinkung eine Vielzahl von Zahnblöcken aufweist, die mit den geneigten Zähnen des drehbaren Knopfs zusammen wirken, wobei wenn der drehbare Knopf gedrückt wird, das Aufnahmerad und die Welle gedreht werden und die federnde Ausklinkung zum Schwanken gezwungen wird und der Anschlagsbereich des Federgestells gelöst ist von dem Zahnrad, um dem Zahnrad die Drehung auf der zweiten Welle zu ermöglichen während des Schwankens der federnden Ausklinkung und deshalb wird das Aufnahmerad synchron gedreht mit dem drehbaren Knopf, um die Zahnseide aufzunehmen von der Spule und die verwendete Länge der Zahnseide wieder um die Spule zu wickeln.

Aus der EP 0 379 504 B1 ist ein Zahnseideapplikator bekannt, mit einer Gabel, die zwei längliche Zinken aufweist, die sich von einem länglichen Griff aus erstrecken; mit Behältermitteln am Griff zur Aufnahme eines Zahnseidenvorrates mit Spendermitteln am Applikator zum Abziehen eines fortlaufenden Zahnseidenfadens unter Spannung von den Behältermitteln und zum Führen der Zahnseide von den Behältermitteln über den Zwischenraum zwischen den Endabschnitten der Gabelzinken, so dass die Zahnseide ohne Unterbrechung aus den Behältermitteln über den genannten Zwischenraum zugeführt und zum Reinigen der Zähne über diesen Zwischenraum gespannt gehalten werden kann; bei dem die Spendermittel eine rotierbare Spule enthalten, um die die Zahnseide so gewickelt ist, dass ein Drehen der Spule die Zahnseide von den Behältermitteln abwickelt und sie entlang einem Zinken und über den genannten Zwischenraum zwischen den Zinken führt; bei dem die Spendermittel weiter einen Achsstumpf an einer der Spule gegenüberliegenden Seite enthalten, der zusammen mit der Spule rotierbar ist, so dass Zahnseide sich über den genannten Zwischenraum und entlang dem anderen Zinken erstreckt und dann um den Achsstumpf gewickelt wird, um den Zahnseidenabschnitt, der sich über den genannten Zwischenraum zwischen den Zinken erstreckt, als Folge der Rotation von Spule und Achsstumpf unter Spannung zu setzen; wobei die Spannung über ein Differenzspannmittel erzeugt wird, das einen größeren Durchmesser des Achsstumpfes gegenüber dem der Spule ausnutzt, so dass durch die gleichzeitige Rotation von Achsstumpf und Spule mehr Zahnseide um den Achsstumpf als um die Spule gewickelt und somit die Differenzspannung erzeugt wird; wobei der Applikator eine Klammer am Griff zwischen Spule und Behältermitteln aufweist, die in Richtung auf eine Stoppvorrichtung, über die die Zahnseide geführt wird, bevor sie auf die Spule gewickelt wird, einstellbar bewegbar ist und die auf die Zahnseide Druck ausüben kann, indem die Klammer in Richtung der Stoppvorrichtung bewegt wird und einen gesteuerten Spannungsbetrag auf die Zahnseide ausübt, bevor sie auf die Spule gewickelt wird.

Aus der DE 44 40 617 A1 ist ein Zahnseidenhalter zum Reinigen der Zahnzwischenräume von Ablagerungen und Essensresten bekannt, wobei ein Träger am vorderen Ende eine Aussparung besitzt, wobei der Träger an der flachen Seite von einer Nute umzogen wird und am hinteren Ende eine Aufspaltung besitzt, die dem Verlauf der Nute folgt und mit Ausgang in V-Form ausgebildet ist, wobei quer durch die entstehenden Backen ein Loch führt, wodurch eine Schraube reicht, die von einer Rändelmutter gehalten wird, wobei der Kopf der Schraube so geformt ist, dass er ein Mitdrehen beim Festziehen der Rändelmutter verhindert, wobei diese Rändelmutter einen Abstandsteil und einen Kranz mit größerem Durchmesser, Griffrillen und gegebenenfalls eine Schraubendrehernute besitzt.

Die bekannten Vorrichtungen sind für eine störungsfreie Verwendung in dem begrenzten Mundraum oftmals sehr klein ausgebildet, sodass ein Bespannen mit Zahnseide oft die motorischen Fähigkeiten der Benutzer überfordert. Größere Vorrichtungen, die für ein Bespannen mit Zahnseide besser geeignet sind, sind in dem beengten Mundraum schwerer handhabbar.

Es ist eine Aufgabe der vorliegenden Erfindung, ein Verfahren und einen wiederverwendbaren Zahnseide-Stick und einen damit kompatiblen Zahnseidenspender zu schaffen, welche einen höheren Komfort für den Anwender, eine zuverlässige Reinigung des Interdentalbereichs und eine Kompatibilität mit allen herkömmlichen Zahnseiden und Zahnbändern ermöglichen. Insbesondere ist ein Bespannen mit Zahnseide verbessert.

Diese und weitere Aufgaben werden ausgehend von einem Verfahren gemäß Anspruch 1 und einer Zahnseidevorrichtung gemäß Anspruch 6 gelöst. Vorteilhafte Weiterbildungen der Erfindung sind in den abhängigen Ansprüchen oder der nachfolgenden Beschreibung angegeben.

Die Erfindung schließt die technische Lehre ein, dass bei einem Verfahren zum Bespannen einer Zahnseidevorrichtung, insbesondere eines Zahnseidesticks einer Zahnseidevorrichtung mit Zahnseide, insbesondere einer hier beschriebenen Zahnseidevorrichtung, verschiedene Schritte umfasst sind. Diese sind im Folgenden aufgeführt.

Insbesondere ist der Schritt umfasst: Vorsehen eines Zahnseidespenders, insbesondere eines mit Zahnseide gefüllten Zahnseidespenders. Der Zahnseidespender kann ein beliebig geformter Zahnseidespender sein, bevorzugt in einer ergonomischen Form, die das Greifen mit einer Hand ermöglicht, etwa nach Art eines Pistolengriffs. Dieser bevorratet die Zahnseide, bevorzugt innerhalb, in Ausgestaltungen aber auch zumindest teilweise außerhalb. Die Zahnseide wird insbesondere vor Bereitstellung des Zahnseidespenders in dem Zahnseidespender bevorratet. Die Zahnseide kann auch ohne den Zahnseidespender getrennt von diesem zugeführt werden. Vorzugsweise ist die Zahnseide in dem Zahnseidespender bevorratet.

Insbesondere ist der Schritt umfasst: Vorsehen eines zum Führen von Zahnseide geeigneten Zahnseidesticks. Der Zahnseidestick kann gleichzeitig oder vor oder nach Vorsehen des Zahnseidespenders vorgesehen werden. In Ausgestaltungen wird der Zahnseidestick in und/oder an dem Zahnseidespender bevorratet. Insbesondere wird der Zahnseidestick in dem Zahnseidespender angeordnet. Das Vorsehen des Zahnseidesticks umfasst in diesem Fall das Herausnehmen des Zahnseidesticks aus dem Zahnseidespender. Dem zeitlich vorab erfolgt das Öffnen des Zahnseidespenders. Zeitlich nach dem Herausnehmen gelagert ist das Verschließen des Zahnseidespenders. Zeitlich nach dem Verschließen gelagert ist das Aufstecken oder Einstecken des Zahnseidesticks in den Zahnseidespender. Insbesondere erfolgt das Aufstecken durch Aufstecken des Verbindungsmittels des Zahnseidesticks in das korrespondierende Verbindungsmittel des Zahnseidespenders. Das Verbindungsmittel des Zahnseidespenders liegt bevorzugt auf der Oberseite und/oder seitlich des Zahnseidespenders. Die beiden Verbindungsmittel sind komplementär und/oder kompatibel ausgebildet. Es kann jeweils ein Verbindungsmittel vorgesehen sein. In Ausgestaltungen können statt des jeweils einen Verbindungsmittels jeweils mehrere Verbindungsmittel vorgesehen sein.

Insbesondere ist der Schritt umfasst: Führen der Zahnseide, insbesondere aus dem Zahnseidespender heraus, um den Zahnseidestick, insbesondere zumindest teilweise um den Zahnseidestick herum. Die in dem Zahnseidespender bevorratete Zahnseide wird um den Zahnseidestick herumgeführt. Vorzugsweise wird die Zahnseide derart um den Zahnseidestick, insbesondere umfänglich um den Zahnseidestick geführt, dass diese einen Ausschnitt oder eine Ausnehmung des Zahnseidesticks überspannt. Der überspannende Teil der Zahnseide ist für die Reinigung der Zahnzwischenräume vorgesehen. Das Führen erfolgt insbesondere entlang einer umfänglichen Nut des Zahnseidesticks. Die Nut ist dabei in Ausführungen umlaufend ohne Umlenkungen -- zwischen Nutanfang und Nutende -- größer gleich 60°, vorzugsweise größer gleich 45° und am meisten bevorzugt größer gleich 30° ausgebildet. Bevorzugt wird die Zahnseide entlang einer Klemmeinrichtung geführt. Das Führen erfolgt dabei derart, dass die Zahnseide die Ausnehmung überspannt, sodass sich der Zahnseidestick in einem bespannten Zustand befindet. Die überspannende Zahnseide wird dabei bevorzugt unter mechanische Spannung gesetzt.

Insbesondere ist der Schritt umfasst: Klemmen und/oder Spannen der Zahnseide an dem Zahnseidestick. Der Schritt Klemmen und/oder Spannen erfolgt zeitlich nach dem Führen der Zahnseide. Die um den Zahnseidestick geführte Zahnseide wird, nachdem der Zahnseidestick derart bespannt wurde, geklemmt. Das Klemmen und/oder Spannen erfolgt bevorzugt gegen den Zahnseidestick, insbesondere ausschließlich gegen den Zahnseidestick. Hierzu wird das Klemmen und/oder Spannen mittels einer geeigneten, an dem Zahnseidestick vorzusehenden oder vorgesehenen Klemmeinrichtung geklemmt. Beispielsweise erfolgt das Klemmen und/oder Spannen durch Anziehen einer Schraube gegen den Zahnseidestick oder einen anderen Teil. Zum Klemmen und/oder Spannen wird die Zahnseide entlang der Klemmeinrichtung geführt. Dabei ist die Zahnseide teilweise im Bereich der Klemmeinrichtung angeordnet und kann mittels der Klemmeinrichtung geklemmt und/oder gespannt werden. Insbesondere kann das Klemmen und/oder Spannen mehrmals, insbesondere während der Verwendung durchgeführt werden. Bevorzugt erfolgt das Klemmen und/oder Spannen vor der Verwendung einmalig. Das Klemmen und/oder Spannen erfolgt bevorzugt gekoppelt mit einer Drehbewegung, insbesondere der Klemmeinrichtung. Über die Drehbewegung wird Spannung auf die Zahnseide aufgebracht. Die Klemmeinrichtung ermöglicht somit zugleich mit dem Klemmen ein Spannen der Zahnseide. Die Zahnseide ist somit ausschließlich über die Klemmeinrichtung auf der von dem Zahnseidespender abgewandten Seite des Zahnseidesticks geklemmt. In Ausführungsformen kann die Zahnseide ergänzend oder alternativ über die Klemmeinrichtung auf der dem Zahnseidespender zugewandten Seite des Zahnseidesticks geklemmt sein.

Insbesondere ist der Schritt umfasst: Zuschneiden der Zahnseide, sodass die Zahnseide mit dem Zahnseidestick getrennt von dem Zahnseidespender verwendbar ist. Die Zahnseide wird aus dem Zahnseidespender gezogen und um den Zahnseidestick herumgeführt, sodass der Zahnseidestick bespannt wird. Damit die Zahnseide sich nicht von dem Zahnseidestick löst, wird diese an dem Zahnseidestick geklemmt und/oder gespannt. Nach dem Klemmen und/oder Spannen wird die den Zahnseidestick bespannende Zahnseide von der in und/oder an dem Zahnseidespender befindlichen, restlichen Zahnseide getrennt. Dieses Trennen kann auf beliebige Art und Weise erfolgen, beispielsweise durch Reißen oder Schneiden. Bevorzugt wird das Trennen mit einer an dem Zahnseidestick oder an dem Zahnseidespender vorgesehenen Zuschneideeinheit zugeschnitten. Bevorzugt wird die Zuschneideeinheit an dem Zahnseidespender vorgesehen. Das Zuschneiden erfolgt bevorzugt nach einem Lösen des Zahnseidesticks, insbesondere des bespannten Zahnseidesticks, von dem Zahnseidespender, kann aber in anderen Ausführungen auch zeitlich davor erfolgen

Insbesondere ist der Schritt umfasst, dass der Zahnseidestick vor dem Führen der Zahnseide, insbesondere vor dem Führen der Zahnseide um den Zahnseidestick, also dem Bespannen, mit dem Zahnseidespender lösbar, insbesondere sicherungsmittelfrei lösbar verbunden wird. Vorzugsweise wird ein Ende des Zahnseidesticks über geeignete Verbindungsmittel in und/oder an den Zahnseidespender gesteckt, insbesondere über weitere geeignete Verbindungsmittel. Die Verbindung erfolgt als Steckverbindung, als Klickverbindung, und/oder auf ähnliche, lösbare Weise. Ein zusätzliches Sichern der Steckverbindung wird bevorzugt nicht vorgesehen. In Ausgestaltungen wird ein Sichern der Steckverbindung über Sicherungsmittel, insbesondere schnell-lösende Sicherungsmittel vorgesehen. Bevorzugt wird kein zusätzliches Sichern vorgesehen, sodass das Verbinden allein durch das Aufstecken und/oder Einstecken realisiert wird. Die Steckverbindung wird bevorzugt für die Dauer des Bespannens, somit für das Führen der Zahnseide um den Zahnseidestick, dem Klemmen und/oder Spannen aufrecht gehalten.

Insbesondere ist der Schritt umfasst, dass für eine Verwendung des Zahnseidesticks mit der geklemmten Zahnseide der Zahnseidestick nach dem Klemmen und/oder Spannen, insbesondere vor dem Zuschneiden, von dem Zahnseidespender gelöst wird. Für das Lösen wird der Zahnseidestick von dem Zahnseidespender abgehoben oder entfernt, wobei die nach Art einer Steckverbindung zusammenwirkenden Verbindungsmittel auseinander bewegt werden. Ein Aufheben einer zusätzlichen Sicherung entfällt. Der bespannte Zahnseidestick kann getrennt von dem Zahnseidespender verwendet werden, insbesondere vor einem Zuschneiden der Zahnseide. Das Lösen umfasst somit ein Abheben oder Abnehmen des Zahnseidesticks von dem Zahnseidespender, ohne dass Sicherungsmittel oder andere Mittel gelöst werden müssen. In Ausführungsformen ist eine Initialkraft aufzubringen, welche beispielsweise eine Klick-Verbindung eines Klickverschlusses aufhebt. Bevorzugt umfasst das Lösen ausschließlich ein Auseinanderbewegen von Zahnseidestick und Zahnseidespender.

In Ausgestaltungen ist vorgesehen, dass das Lösen nach dem Klemmen und/oder Spannen, insbesondere vor dem Zuschneiden durchgeführt wird. Sobald der Zahnseidestick relativ von dem Zahnseidespender wegbewegt ist, wird die den Zahnseidestick bespannende Zahnseide von der in dem oder an dem Zahnseidespender verbleibenden Zahnseide getrennt. Das Wegbewegen erfolgt in umgekehrte Richtung zu dem, vorzugsweise sicherungsmittelfreien, Verbinden des Zahnseidesticks mit dem Zahnseidespender. Beim Verbinden des Zahnseidesticks mit dem Zahnseidespender wird der Zahnseidestick relativ zu dem Zahnseidespender hinbewegt. Das relative Bewegen erfolgt derart, dass die Verbindungsmittel in Eingriff bringbar oder aus dem Eingriff bringbar sind. Dabei greifen erste Verbindungsmittel des Zahnseidespenders in die zweiten Verbindungsmittel des Zahnseidesticks für eine Steckverbindung ein beziehungsweise für eine Lösung der Steckverbindung wird der Eingriff aufgehoben.

In Ausgestaltungen ist vorgesehen, dass das Klemmen und/oder Spannen über eine an dem Zahnseidestick vorgesehene Klemmeinrichtung erfolgt, wobei die Klemmeinrichtung vor dem Führen gelöst wird und nach dem Führen geklemmt wird. Zeitlich vor dem Bespannen des Zahnseidesticks mit der Zahnseide, genauer vor dem Führen der Zahnseide um den Zahnseidestick, wird die Klemmeinrichtung gelöst. Dies erfolgt zum Beispiel durch eine Drehbewegung, beispielsweise durch eine schraubende Drehbewegung, insbesondere der Klemmeinrichtung bzw. eines Teils der Klemmeinrichtung. Die Klemmeinrichtung bildet im gelösten Zustand einen Spalt zu dem Zahnseidestick. Die Zahnseide wird um den Zahnseidestick durch den Spalt geführt. Nach dem Durchführen der Zahnseide durch den Spalt wird die Zahnseide geklemmt. Dies erfolgt durch entsprechende Gegenbewegung der Klemmeinrichtung, beispielsweise durch Gegen-Drehbewegung. Das Klemmen und/oder Spannen wird mit einer Klemmkraft durchgeführt. Die Klemmkraft kann je nach Art und Beschaffenheit der Zahnseide gewählt werden. Vorzugsweise wird die Klemmkraft so gewählt, dass die Zahnseide bei einer Verwendung sicher hält und die Spannung zumindest im Wesentlichen beibehalten wird. In Ausgestaltungen wird das Klemmen und/oder Spannen mehrfach durchgeführt. Sollte sich bei der Verwendung zeigen, dass die Klemmung und/oder Spannung der Zahnseide nachlässt, kann ein erneutes Klemmen und/oder Spannen, ggf. mit einer höheren Klemmkraft durchgeführt werden, wobei ein Lösen der Klemmung optional ist und bevorzugt entfällt. Nach Gebrauch/Verwendung des bespannten Zahnseidesticks, wird die Klemmung und/oder Spannung aufgehoben und die Zahnseide von dem Zahnseidestick entfernt und/oder entsorgt. Auf diese Weise ist ein wiederverwendbarer Zahnseidestick geschaffen.

In Ausgestaltungen ist vorgesehen, dass für das Klemmen und/oder Spannen die Zahnseide zu und weg von dem Zahnseidespender auf der gleichen Seite der Klemmeinrichtung entlanggeführt wird und dann, bevorzugt auf der gleichen Seite der Klemmeinrichtung, geklemmt und/oder gespannt wird. Für das Bespannen des Zahnseidesticks bzw. Führen der Zahnseide um den Zahnseidesticks wird die Zahnseide zunächst weg von dem Spender, genauer aus diesem heraus bewegt, dann um den Zahnseidestick bewegt und schließlich wieder weg von dem Zahnseidestick bewegt. Das Wegbewegen erfolgt bevorzugt in eine Richtung, in welcher sich die Zuschneideeinheit befindet. Die Zuschneideeinheit befindet sich bevorzugt an dem Zahnseidespender. Somit wird die Zahnseide für das Bespannen zunächst vom Zahnseidespender wegbewegt und dann wieder zu dem Zahnseidespender hinbewegt. Dabei passiert die Zahnseide die Klemmeinrichtung, genauer einen durch den Zahnseidestick und die Klemmeinrichtung gebildeten Spalt, sowohl bei der Führung weg von dem Zahnseidespender als auch bei der Führung hin zum Zahnseidespender. Da der Zahnseidestick umlaufend mit der Zahnseide umgeben wird, ist es grundsätzlich möglich, die Zahnseide auf unterschiedlichen Seiten der Klemmeinrichtung vorbeizuführen. Bevorzugt ist vorgesehen, dass bei dem Führen der Zahnseide um den Zahnseidestick die Zahnseide auf der gleichen Seite der Klemmeinrichtung, insbesondere auch des Zahnseidesticks, aber immer zwischen Klemmeinrichtung und Zahnseidestick, insbesondere durch den Spalt, geführt wird.

Die Erfindung schließt auch die technische Lehre ein, dass bei einer Zahnseidevorrichtung, insbesondere einer Zahnseidevorrichtung zum Reinigen von Zahnzwischenräumen, Mittel zum Durchführen des hier beschriebenen Verfahrens vorgesehen sind. Die Mittel bzw. die Zahnseidevorrichtung umfassen insbesondere nachfolgend aufgeführte Merkmale.

In Ausgestaltungen ist ein Zahnseidestick vorgesehen. Der Zahnseidestick ist derart ausgebildet, dass um diesen oder über diesen eine Zahnseide führbar und/oder geführt ist. Dabei umläuft die Zahnseide zumindest ein Ende des Zahnseidesticks, welches für eine Verwendung in einem Mundraum vorgesehen ist.

Insbesondere überspannt die Zahnseide in einem bespannten Zustand eine Ausnehmung des Zahnseidesticks. Die Ausnehmung ist an einem Ende des Zahnseidesticks vorgesehen. Bevorzugt ist eine einzige Ausnehmung vorgesehen. In Ausgestaltungen können mehrere Ausnehmungen vorgesehen sein. Die Form der Ausnehmung kann beliebig gestaltet sein. Bevorzugt weist die Ausnehmung in einer Draufsicht einen etwa halbkreisförmigen oder U-förmigen Querschnitt auf. Seitlich begrenzt ist die Ausnehmung durch bevorzugt zwei Arme oder Fortsätze des Zahnseidesticks. Die Arme ragen gabelförmig von dem restlichen Zahnseidestick ab. Dabei können die Arme in der gleichen Ebene wie der restliche Zahnseidestick angeordnet sein. In Ausgestaltungen ragen die Arme quer aus der Ebene des restlichen Zahnseidesticks ab. Das Abragen erfolgt bevorzugt in einer gekrümmten Bahn. Am jeweils äußersten Ende der Arme, welches entfernt zu dem restlichen Zahnseidestick liegt, ragen diese etwa in einem Winkel von größer gleich 45° bis kleiner gleich 120°, weiter bevorzugt von größer gleich 75° bis kleiner gleich 100° und am meisten bevorzugt von größer gleich 80° bis kleiner gleich 90° von dem Zahnseidestick, insbesondere aus der Ebene des Zahnseidesticks ab. Die Ebene der Ausnehmung ist bevorzugt quer zu der Ebene des restlichen Zahnseidesticks angeordnet. Die Ebene der Ausnehmung wird durch die Arme des Zahnseidesticks aufgespannt. Die Ebene des Zahnseidesticks wird durch den restlichen Zahnseidestick aufgespannt.

Insbesondere umfasst die Zahnseidevorrichtung einen Zahnseidespender. Der Zahnseidespender kann ein beliebiger Zahnseidespender sein. Bevorzugt ist der Zahnseidespender ein Zahnseidespender mit einem Innenraum, wobei in dem Innenraum die Zahnseide bevorratbar und/oder bevorratet ist und/oder in dem der Zahnseidestick bevorratbar und/oder bevorratet ist. Der Zahnseidespender ist zur Aufnahme der Zahnseide und/oder des Zahnseidesticks ausgebildet. Hierzu weist der Zahnseidespender zumindest einen Innenraum auf. Der Innenraum kann in mehrere Teile unterteilt sein, sodass sich mehrere Innenraumbereiche ergeben. Die Innenbereiche können zumindest teilweise miteinander verbunden sein. In Ausgestaltungen sind die mehreren Innenräume voneinander getrennt, beispielsweise durch entsprechende Wandungen im Innenraum. Zur sicheren Aufnahme des Zahnseidesticks und/oder der Zahnseide sind in dem Innenraum entsprechende Haltevorrichtungen vorgesehen. Die Haltevorrichtungen können fest mit dem Zahnseidespender verbunden sein. In Ausgestaltungen sind die Halterungen variierbar ausgebildet, sodass eine Zahnseide oder mehrere Zahnseiden, insbesondere in verschiedenen Anordnungen, und/oder ein oder mehrere Zahnseidesticks, insbesondere in verschiedenen Formen sicher im Innenraum haltbar sind oder gehalten werden. In Ausgestaltungen ist in dem Innenraum eine Kapselung/ein Käfig vorgesehen oder vorsehbar, der eine hygienische Aufnahme der Zahnseide ermöglicht. Der Käfig / die Kapselung umgibt die Zahnseide zumindest teilweise, insbesondere zumindest teilweise umfänglich, sodass diese vor äußeren, störenden Einflüssen zumindest teilweise abgeschirmt ist. Die Kapselung/ der Käfig kann in dem Innenraum ortsfest und/oder bewegbar vorgesehen sein.

Insbesondere ist der Zahnseidestick mit dem Zahnseidespender über eine Steckverbindung, einen Klick-Verschluss und/oder dergleichen lösbar, insbesondere sicherungsmittelfrei lösbar, verbindbar und/oder verbunden, vorzugsweise durch Aufstecken und/oder Einstecken. Für eine Steckverbindung umfasst der Zahnseidespender entsprechende erste Verbindungsmittel und der Zahnseidestick entsprechende komplementäre zweite Verbindungsmittel. Die Verbindungsmittel sind für ein steckendes Zusammenwirken ausgebildet. Hierzu sind die Verbindungsmittel durch Relativbewegung zu- und ineinander lösbar verbindbar ausgebildet. In Ausgestaltungen umfassen die Verbindungsmittel Fortsätze, Anformungen, Vorsprünge, Rippen, Hinterschnitte und dergleichen und entsprechend auf der anderen Seite Ausnehmungen, Nuten, Bohrungen, Öffnungen, Durchgangslöcher, Aufnahmen, Hinterschnitte und dergleichen. Die Verbindungsmittel sind insbesondere für eine formschlüssige und/oder kraftschlüssige Steckverbindung ausgebildet. Entsprechend sind die ineinandersteckbaren Verbindungsmittel hinsichtlich ihres Querschnitts der ineinandergreifenden Abschnitte komplementär ausgebildet. Beispielsweise ist das erste Verbindungsmittel als eine zylindrische Vertiefung ausgebildet. Komplementär dazu ist das zweite Verbindungsmittel als ein komplementärer zylindrischer Fortsatz ausgebildet, der in die zylindrische Vertiefung steckbar ist. Andere Ausführungsformen wie beispielsweise ein federnder Fortsatz oder zwei federnde Fortsätze für eine Klickverbindung, insbesondere mit endseitigen Nasen zum Einrasten in komplementäre Öffnungen sind vorgesehen oder vorhersehbar. Insbesondere sind die Querschnitte der ineinandergreifenden Abschnitte rotationsasymmetrisch ausgebildet. In Ausgestaltungen sind die Querschnitte der ineinandergreifenden Abschnitte rotationssymmetrisch ausgebildet. Die Querschnitte können eine beliebige Form wie kreisförmig, oval, polygonal oder auch ungleichmäßige Querschnitte aufweisen. Die Verbindung ist somit formschlüssig realisiert, ohne dass es zusätzlicher Sicherungsmittel wie kraftschlüssiger und/oder stoffschlüssiger Sicherungsmittel bedarf. Integrierte Sicherungsmittel, wie etwa bei einem Klick-Verschluss sind nicht unter zusätzliche Sicherungsmittel zu verstehen.

In Ausgestaltungen ist vorgesehen, dass der Zahnseidespender mit einem Gehäusegrundkörper ausgebildet ist. Der Gehäusegrundkörper umfasst eine Bodeneinheit. Von der Bodeneinheit ragt umfänglich eine Wandung quer dazu ab. Die Wandung kann durchgängig, ununterbrochen oder unterbrochen sein. Bevorzugt ist die Wandung durchgängig ausgebildet. Die Bodeneinheit und die davon abragende Wandung bilden den topfförmigen Gehäusegrundkörper des Zahnseidespenders. Bodeneinheit und Wandung definieren und/oder umgeben damit zumindest einen Teil des Innenraums des Zahnseidespenders.

Insbesondere umfasst der Zahnseidespender eine von dem Gehäusegrundkörper abnehmbare Deckeleinrichtung zum Öffnen und/oder Verschließen des von dem Gehäusegrundkörper und der Deckeleinrichtung definierten und/oder gebildeten Innenraums. Die Deckeleinrichtung ist komplementär zu dem Gehäusegrundkörper ausgebildet, sodass die Deckeleinrichtung durch Aufsetzen und/oder Aufstecken auf den Gehäusegrundkörper mit diesem eine Steckverbindung ausbildet. Die Deckeleinrichtung umfasst in Ausgestaltungen eine Deckeleinheit, von der umfänglich quer eine Wandung abragt. Die Wandung kann unterbrochen oder durchgängig sein. Insbesondere ist die Wandung durchgängig, also ununterbrochen ausgeführt.

Für eine bündige Verbindung von Deckeleinrichtung und Gehäusegrundkörper weist eine Wandung, bevorzugt die Wandung des Gehäusegrundkörpers, einen Absatz auf, sodass ein Teil der Wandung ab dem Absatz ein gegenüber der verbleibenden Wandung in Richtung zusammenwirkende Kontaktfläche mit der komplementären Wandung geringeres Abmaß, beispielsweise einen geringeren Außendurchmesser aufweist. Auf diese Weise lässt sich die komplementäre Wandung auf die zurückgesetzte Wandung aufsetzen und schlägt an dem Absatz an. Die verbleibende, nicht zurückgesetzte Wandung weist im Wesentlichen das gleiche äußere Abmaß wie die komplementäre Wandung auf. Die zurückgesetzte Wandung weist im Wesentlichen das gleiche äußere Abmaß wie das innere Abmaß der komplementären Wandung auf.

In Ausgestaltungen ist vorgesehen, dass die Deckeleinrichtung an der dem Gehäusegrundkörper abgewandten Außenseite und/oder seitlich ein erstes Verbindungsmittel aufweist, welches komplementär zu einem mit dem ersten Verbindungsmittel für ein lösbares Zusammenwirken, insbesondere einem sicherungsmittelfreien lösbaren Zusammenwirken, vorgesehenen zweiten Verbindungsmittel des Zahnseidesticks ausgebildet ist. Das erste Verbindungsmittel ist als Öffnung oder Vertiefung ausgebildet, in welche zumindest das zweite Verbindungsmittel einsteckbar ist. Vorzugsweise weist das erste Verbindungsmittel eine an die Öffnung anschließende oder die Öffnung erweiternde Nut auf, in welche zumindest ein Teil des Zahnseidesticks, insbesondere ein an das zweite Verbindungsmittel angrenzender Teil des Zahnseidesticks aufnehmbar ist. Auf diese Weise lässt sich eine rotationssymmetrische oder eine rotationsasymmetrische Steckverbindung realisieren. Die Steckverbindung im eingesteckten Zustand weist bevorzugt lediglich einen Freiheitsgrad, weiter bevorzugt keinen Freiheitsgrad auf.

In Ausgestaltungen ist vorgesehen, dass der Zahnseidestick an seinem entfernt zu der Ausnehmung angeordneten Ende das zweite Verbindungsmittel aufweist. Bevorzugt ist das zweite Verbindungsmittel an einem entfernt zu der - im bespannten Zustand überspannten - Ausnehmung des Zahnseidesticks angeordnet. Das zweite Verbindungsmittel ist komplementär zu dem ersten Verbindungsmittel für ein Zusammenwirken, insbesondere ein sicherungsmittelfreies Zusammenwirken, mit dem ersten Verbindungsmittel, ausgebildet. Die Verbindungsmittel für die Steckverbindung sind derart komplementär ausgebildet, dass die durch die Verbindungsmittel realisierte Steckverbindung lediglich einen Freiheitsgrad, bevorzugt keinen Freiheitsgrad aufweist. Die Steckverbindung lässt sich somit einfach nur durch Bewegen entlang einer einzigen Bewegungsrichtung lösen, bevorzugt durch eine im Wesentlichen lineare Relativbewegung der Verbindungsmittel zueinander. Dabei ist vorzugsweise eine Initialkraft zum Lösen einer integrierten Halte- oder Sicherungsfunktion aufbringbar, beispielsweise bei Ausführung der Verbindungsmittel als Klick-Verschluss. Durch die Ausbildung einer Steckverbindung mit maximal einem Freiheitsgrad sind keine weiteren Sicherungsmittel wie Schrauben, Kleber etc. erforderlich, um die Zahnseidevorrichtung zu handhaben, ohne ein ungewolltes Lösen des Zahnseidesticks von dem Zahnseidespender zu bewirken.

In Ausgestaltungen ist vorgesehen, dass die Deckeleinrichtung an der dem Gehäusegrundkörper abgewandten Außenseite eine Durchgangsöffnung und/oder eine Zuschneideeinheit aufweist, um Zahnseide aus dem Innenraum des Zahnseidespenders herauszuführen bzw. von der in dem Innenraum verbleibenden restlichen Zahnseide zu trennen. Die Zahnseide ist in dem Innenraum des Zahnseidespenders angeordnet. Der Zahnseidestick ist für ein Bespannen an der Außenseite des Zahnseidespenders angeordnet. Um den Zahnseidestick zu bespannen, wird die Zahnseide durch eine Durchgangsöffnung des Zahnseidespenders geführt. Vorzugsweise ist die Durchgangsöffnung in der Oberseite der Deckeleinrichtung vorgesehen. An oder in der Durchgangsöffnung kann eine Führungs- und/oder Haltehilfe vorgesehen sein, durch welche die Zahnseide führbar bzw. haltbar ist. So lässt sich beispielsweise die Zahnseide durch die Führungshilfe aus dem Innenraum herausführen und über die Haltehilfe in dem herausgezogenen Zustand halten. Bei einem Zuschneiden wird so verhindert, dass die Zahnseide ungewollt zurück komplett in den Innenraum gelangt. Die aus dem Innenraum herausgeführte Zahnseide wird um den Zahnseidestick geführt. Dabei erfolgt das Führen von der Durchgangsöffnung um den verbunden Zahnseidestick bis zumindest zu der Klemmeinrichtung. Mit der Zuschneideeinheit ist die für das Bespannen erforderliche Zahnseide von der restlichen Zahnseide, die in oder an dem Zahnseidespender verbleibt, trennbar. Die Zuschneideeinheit kann jede beliebige Zuschneideeinheit sein, mit der das Trennen realisierbar ist. Bevorzugt ist die Zuschneideeinheit als eine mit einer Trennkante versehene Einheit, beispielsweise als ein entsprechendes Metallblech ausgebildet. Die Zuschneideeinheit ist bevorzugt in einer entsprechenden Aufnahme an der Deckeleinrichtung, insbesondere an der Außenseite der Deckeleinheit angeordnet. Vorzugsweise sind die Durchgangsöffnung und die Zuschneideeinheit an unterschiedlichen Seiten des durch den eingesteckten Zahnseidesticks unterteilten Bereichs der Deckeleinrichtung angeordnet.

In Ausgestaltungen ist eine Klemmeinrichtung an dem Zahnseidestick vorgesehen. Die Klemmeinrichtung verhindert, dass sich die um den Zahnseidestick geführte Zahnseide lockert oder löst. Der bespannte Zahnseidestick wird so in einem bespannten Zustand gehalten, insbesondere auch mit einer eingestellten Spannung der Zahnseide. Die Klemmeinrichtung ist lösbar mit dem Zahnseidestick verbunden. Zum Führen der Zahnseide um den Zahnseidestick wird die Klemmeinrichtung gelöst, sodass ein Spalt zwischen Zahnseidestick und Klemmeinrichtung entsteht. Durch diesen Spalt wird die Zahnseide zum Bespannen des Zahnseidesticks geführt. Sobald die Zahnseide durch den Spalt geführt ist, wird die Klemmeinrichtung in einen klemmenden und/oder spannenden Zustand gebracht. Dabei wird die Zahnseide gegen den Zahnseidestick geklemmt und/oder gespannt. So ist eine Klemmung der Zahnseide auch bei in einem von dem Zahnseidespender gelösten Zustand des Zahnseidesticks realisiert bzw. realisierbar. Beispielsweise ist die Klemmeinrichtung als Schraubverbindung ausgebildet. Die Schraubverbindung umfasst bevorzugt eine Schraube, eine Handhabe und eine Mutter. Die Handhabe weist eine Durchgangsöffnung auf, durch welche die Schraube mit deren Schraubenschaft durchsteckbar ist. Zur Durchführung der Schraube durch den Zahnseidestick weist dieser ebenfalls eine Durchgangsöffnung auf. Nach Durchführen der Schraube durch die Durchgangsöffnung des Zahnseidesticks ragt die Schraube mit dem Schraubenschaft über den Zahnseidestick hervor. Auf das hervorragende Ende des Schraubenschafts ist die Mutter aufgebracht. Die Schraube weist einen Schraubenkopf auf. Um den Schraubenkopf in der Handhabe aufzunehmen, weist die Handhabe eine entsprechende Aufnahmeöffnung auf, die komplementär zu dem Schraubenkopf ausgebildet ist. Vorzugsweise sind die Aufnahmeöffnung und der komplementäre Schraubenkopf derart ausgebildet, dass der Schraubenkopf nicht in der Aufnahmeöffnung verdrehbar ist, somit rotationssicher angeordnet ist. Zum Klemmen und/oder Spannen wird die Handhabe gedreht. Dabei wird der in der Aufnahmeöffnung rotationssicher gehaltene Schraubenkopf mitgedreht. Mit dem Schraubenkopf dreht sich der Schraubenschaft. Dieser wird mit Drehung in die Mutter eingedreht. Hierdurch wird die Handhabe näher an den Zahnseidestick gebracht. Ein anfänglich zwischen Handhabe und Zahnseidestick vorhandener Spalt wird dabei verringert. Die in dem Spalt befindliche Zahnseide wir bei Verringerung des Spalts zwischen Handhabe und Zahnseidestick geklemmt und/oder gespannt. Zum Lösen wird die Handhabe in die andere Richtung gedreht. Der Spalt vergrößert sich und die Klemmung/Spannung der Zahnseide in dem Spalt wird aufgehoben. Andere Arten der Klemmung/Spannung können realisiert werden durch eine entsprechend anders ausgebildete Klemmeinrichtung. Andere Klemmeinrichtungen, mit denen die Zahnseide auch im von dem Zahnseidespender gelösten Zustand des Zahnseidesticks realisiert bzw. realisierbar sind, können vorgesehen oder vorhersehbar sein.

In Ausgestaltungen ist vorgesehen, dass der Zahnseidespender als eine Art Pistolengriff ausgebildet ist, welcher zwei unterschiedliche, insbesondere zwei unterschiedliche, aber zusammenhängende, Abschnitte für ein ergonomisches Greifen aufweist. Der Pistolengriff ist derart zu verstehen, dass er einen Griff zu dem länglichen Zahnseidestick -- längs oder quer -- zu dessen Haupterstreckungsrichtung bildet. Ähnlich wie bei einer Pistole ragt der Griff aus der Haupterstreckungsrichtung ab und ermöglicht ein ergonomisches Greifen. Der Griff ragt derart ab, dass bei einem Greifen durch einen Nutzer der Zahnseidestick in Verlängerung des Arms des greifenden Nutzers abragt, entweder quer dazu oder längs dazu. Der nach Art eines Pistolengriffs ausgebildete Zahnseidespender weist für ein ergonomisches Greifen zwei unterschiedliche Abschnitte auf. In einer Draufsicht bilden die beiden Abschnitte in etwa einen 8-förmigen oder Schließzylinder-förmigen Querschnitt auf. Der Zahnseidespender weist somit etwa zwei ineinander übergehende, sich teilweise überlappende Hohlzylinder mit kreisförmigem bzw. langlochartigen Querschnitt auf. Die Durchmesser der jeweiligen Hohlzylinder sind bevorzugt unterschiedlich ausgebildet, insbesondere die Außendurchmesser.

Der Zahnseidestick ist derart an dem Zahnseidespender angebracht oder anbringbar, dass einer der Arme näher an dem Zahnseidespender angeordnet ist, als der andere Arm. Die Arme ragen somit quer, insbesondere in einem Winkel größer gleich 45° von einer durch die Oberfläche oder Oberseite der Deckeleinrichtung gebildeten Ebene ab. Die Deckeleinrichtung weist auf der von dem Gehäusegrundkörper abgewandten Seite eine Oberfläche und/oder eine Oberseite auf. An dieser ist zumindest die Zuschneideeinheit und/oder die Durchgangsöffnung ausgebildet, zumindest in einem Toleranzbereich von etwa größer gleich 0,1 mm bis kleiner gleich 5 mm, weiter bevorzugt von größer gleich 0,2 mm bis kleiner gleich 4 mm und am meisten bevorzugt von größer gleich 0,3 mm bis kleiner gleich 3,5 mm über und/oder unter, insbesondere parallel über und/oder unter, der Ebene der Oberfläche / Oberseite. Die Arme des Zahnseidesticks ragen aus der Ebene quer heraus, insbesondere in einem Winkel von größer gleich 45°, weiter bevorzugt von größer gleich 60° und am meisten bevorzugt von größer gleich 75°. Eine gedachte Längsachse in Verlängerung des Zahnseidesticks, d.h. ohne den Bereich der Ausnehmung, liegt vorzugsweise in Verlängerung der Ebene, wobei die Längsachse in einem Winkel von bevorzugt größer gleich 70°, weiter bevorzugt von größer gleich 80° und am meisten bevorzugt von größer gleich 85° und/oder kleiner gleich 110°, weiter bevorzugt kleiner gleich 100° und am meisten bevorzugt kleiner gleich 95° quer zu der Ebene abragt. Entsprechend ist nicht nur ein Arm des Zahnseidesticks im verbundenen Zustand mit dem Zahnseidespender näher an dem Zahnseidespender angeordnet, sondern das Ende eines Arms mit Ausnahme bei einer von 90° abweichenden Verlängerung des Zahnseidesticks ohne den Bereich der Ausnehmung und der Arme, weiter entfernt von der Oberfläche / Oberseite bzw. der durch diese aufgespannten Ebene entfernt angeordnet. Der Zahnseidestick weist im Bereich der Klemmung vorzugsweise zwei Führungen für die Zahnseide in Form von je einer Vertiefung auf. Die Klemmeinrichtung ist für ein Klemmen der Zahnseide gegen den Zahnseidestick, insbesondere ausschließlich gegen den Zahnseidestick, ausgebildet, sodass eine zwischen der Klemmeinrichtung und dem Zahnseidestick gehaltene Zahnseide auch in einem von dem Zahnseidespender gelösten Zustand des Zahnseidesticks mit der Klemmeinrichtung und dem Zahnseidestick geklemmt ist. Der Zahnseidespender weist in Richtung von der Bodeneinheit des Gehäusegrundkörpers zu der Deckeleinrichtung des Gehäusegrundkörpers eine Längsachse auf. Diese erstreckt sich bevorzugt quer, insbesondere orthogonal von der Bodeneinheit und/oder der Deckeleinrichtung, insbesondere einer von der Deckeleinrichtung und/oder der Bodeneinheit aufgespannten Ebene. Deckeleinrichtung und/oder Bodeneinheit sind vorzugsweise als ebene Fläche ausgebildet, können in Ausgestaltungen aber auch als gekrümmte Flächen ausgebildet sein. Die gedachte Längsachse des Zahnseidesticks bildet mit der Längsachse des Gehäusegrundkörpers wie vorstehend beschrieben einen Winkel, wobei der Winkel vorzugsweise größer gleich 70°, größer gleich 75° und am meisten bevorzugt größer gleich 80° beträgt und vorzugsweise kleiner gleich 110°, weiter bevorzugt kleiner gleich 100° und am meisten bevorzugt kleiner gleich 95° beträgt. Die Führung für die Zahnseide ist seitlich an dem Zahnseidestick angeordnet, sodass die Führung umlenkungsfrei, das heißt ohne Umlenkungen in einem Winkel größer gleich 10°, bevorzugt größer gleich 15° , weiter bevorzugt größer gleich 20° und/oder kleiner gleich 170°, weiter bevorzugt kleiner gleich 160° und am meisten bevorzugt kleiner gleich 150°, betrachtet quer zu der von der Führung gebildeten Bahn, also in Richtung, in welcher die Ausnehmung von der Zahnseide überspannt wird. Verlängerungen der Führung bilden an keiner Stelle einen aus der von den Armen aufgespannten Ebene und der Ebene herauslaufenden Winkel von kleiner gleich 45°, bevorzugt kleiner gleich 35°, weiter bevorzugt von kleiner gleich 25° und am meisten bevorzugt von kleiner gleich 15°.

In Ausführungen ist ergänzend oder alternativ vorgesehen, dass im verbundenen Zustand die Oberfläche des Zahnseidesticks und die Oberfläche des Zahnseidespenders in einem Bereich liegen, welcher durch die zu der Ebene parallelen Ebenen erste Ebene und zweite Ebene begrenzt wird, wobei die erste Ebene maximal 5 mm, bevorzugt maximal 3 mm entfernt von der Ebene liegt und die andere, zweite Ebene maximal 5 mm, bevorzugt maximal 3 mm, auf der gegenüberliegenden Seite der Ebene von dieser entfernt liegt. Die Oberseite des Zahnseidespenders spannt eine Ebene auf. Versetzt zu dieser existieren gedacht auf jeder Seite der Ebene je eine weitere, versetzte Ebene, welche in einem Abstand oder Bereich voneinander entfernt liegen. Innerhalb dieses durch die beiden weiteren Ebenen definierten Bereichs liegen die durch die Oberseite des Zahnseidespenders aufgespannte Ebene, die Oberseite des Zahnseidesticks und die Oberseite des Zahnseidespenders.

Weitere, die Erfindung verbessernde Maßnahmen sind in den Unteransprüchen angegeben oder ergeben sich aus der Beschreibung von Ausführungsbeispielen der Erfindung. Sämtliche aus den Ansprüchen der Beschreibung hervorgehenden Merkmale und/oder Vorteile einschließlich konstruktiver Einzelheiten, räumliche Anordnung und Verfahrensschritte, können so für sich als auch in verschiedensten Kombinationen erfindungswesentlich sein.

Die Erfindung wird nachfolgend anhand von einem in den Zeichnungen dargestellten Ausführungsbeispiel näher erläutert. Für gleiche oder ähnliche Bauteile oder Merkmale werden dabei einheitliche Bezugszeichen verwendet. Merkmale oder Bauteile verschiedener Ausführungsformen können kombiniert werden, um so weitere Ausführungsformen zu erhalten. Sämtliche aus den Ansprüchen der Beschreibung oder Zeichnungen hervorgehenden Merkmale und/oder Vorteile einschließlich konstruktiver Einzelheiten, räumliche Anordnung und Verfahrensschritte, können so für sich als auch in verschiedensten Kombinationen erfindungswesentlich sein.

Es zeigen:
- Fig. 1: eine schematische, perspektivische Explosionsdarstellung einer Ausführungsform einer Zahnseidevorrichtung,
- Fig. 2: eine schematische Vorderansicht einer Ausführungsform der Zahnseidevorrichtung mit einer Schnittlinie A-A,
- Fig. 3: eine schematische seitliche Schnittdarstellung einer Ausführungsform eines Zahnseidesticks entlang der Schnittlinie A-A.
- Fig. 4: eine schematische Perspektivansicht der Ausführungsform nach Fig. 3 in einem zusammengebauten, unbespannten Zustand,
- Fig. 5: schematisch die Ausführungsform nach Fig. 4. während eines Bespannungsvorgangs,
- Fig. 6: schematisch in einer Perspektivansicht die Verwendung der Ausführungsform in einem bespannten, gelösten Zustand,
- Fig. 7: schematisch einen Teil der Ausführungsform nach Fig. 6 in einer anderen Perspektivansicht,
- Fig. 8: schematisch die Ausführungsform nach Fig. 7 in einer anderen Perspektive,
- Fig. 9: schematisch die Ausführungsform nach Fig. 5 mit einer anderen Griffhaltung,
- Fig. 10: schematisch einen Vorgang zum Zusammenbau eines Zahnseidesticks und Reinigen von Zahnzwischenräumen mit einer anderen Ausführungsform einer Zahnseidevorrichtung in Perspektivansichten,
- Fig. 11: schematisch einen Verbindungs- bzw. Lösevorgang einer Ausführungsform eines Zahnseidesticks von einer Ausführungsform eines Zahnseidespenders in verschiedenen Ansichten (view 1 bis view 7),
- Fig. 12: schematisch in einer Perspektivansicht einen von einem Zahnseidespender gelösten Zahnseidestick,
- Fig. 13: schematisch in einer Perspektivansicht eine von der Oberseite des Zahnseidespenders aufgespannte Ebene bei einem Halten einer Ausführungsform einer Zahnseidevorrichtung,
- Fig. 14: schematisch in einer Seitenansicht eine Ausführungsform einer Zahnseidevorrichtung mit einer von der Oberseite aufgespannten Ebene und
- Fig. 15: schematisch in einer Seitenansicht eine Ausführungsform einer Zahnseidevorrichtung mit einer orthogonal zur Haupterstreckungsrichtung verlaufenden Längsachse, welche durch Gehäusegrundkörper und Deckeleinrichtung führt.

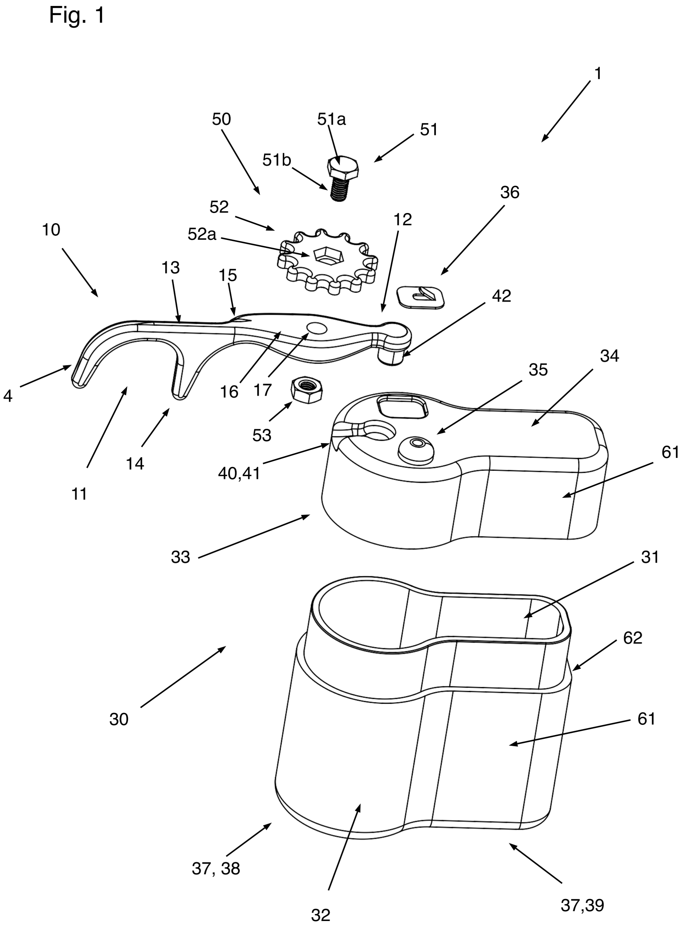

Die Fig. 1 bis 15 zeigen in unterschiedlichen Ansichten und Detaillierungsgraden verschiedene Ausführungsformen einer Zahnseidevorrichtung 1. Die dargestellte Zahnseidevorrichtung 1 umfasst eine länglichen Zahnseidestick 10. Der Zahnseidestick 10 ist zum Bespannen mit einer Zahnseide 20 ausgebildet. Die Zahnseide 20 ist im bespannten Zustand umfänglich um den Zahnseidestick 1 geführt und überspannt dabei eine Ausnehmung 11. Zum Bespannen ist der Zahnseidestick 10 über Verbindungsmittel 40 steckbar und lösbar, insbesondere sicherungsmittelfrei, mit einem Zahnseidespender 30 verbunden. Der Zahnseidespender 30 ist zur Aufnahme der Zahnseide 20 und des Zahnseidesticks 10 in dessen Innenraum 31 ausgebildet. Der Innenraum 31 wird durch ein Grundgehäuse 32 und der dazu komplementären Deckeleinrichtung 33 definiert bzw. gebildet. Der Zahnseidestick 10 weist für eine lösbare, steckbare Verbindung mit dem Zahnseidespender 30 das zweite Verbindungsmittel 42 auf, welche komplementär zu den ersten Verbindungsmitteln 41 des Zahnseidespenders 30 ausgebildet ist. Zum Zuschneiden der Zahnseide 20 im bespannten Zustand des Zahnseidesticks 10 ist eine Zuschneideeinheit 36 vorgesehen. Zum Führen der Zahnseide 20 aus dem Innenraum 31 heraus weist die Deckeleinrichtung 33 eine Durchgangsöffnung 35 auf. Um die Zahnseide 20 an dem Zahnseidestick 10 zu klemmen und/oder spannen, ist eine Klemmeinrichtung 50 vorgesehen. Die Klemmeinrichtung 50 umfasst eine Schraube 51 mit einem Schraubenkopf 51a und einem Schraubenschaft 51b. Weiter umfasst die Klemmeinrichtung 50 eine Handhabe 52, die eine Aufnahme 52a für den Schraubenkopf 51a aufweist. Zudem umfasst die Klemmeinrichtung 50 eine Mutter 53, die mit dem Schraubenschaft 51b zusammenwirkt. Insbesondere weist die Mutter 53 ein Innengewinde auf, welches mit einem Außengewinde des Schraubenschafts 51b zusammenwirkt. Fig. 1 zeigt einen Aufbau der dargestellten Ausführungsform.

Der Zahnseidestick 10 ist als länglicher Zahnseidestick 10 mit einem ersten Ende 12, an welchem die zweiten Verbindungsmittel 42 angeordnet sind, ausgeführt. Das zweite Verbindungsmittel 42 ist in der dargestellten Ausführungsform als kreiszylindrischer Vorsprung 42 ausgebildet, der quer zu dem Zahnseidestick 10 von dessen Haupterstreckungsrichtung von einer Unterseite des Zahnseidesticks 1 abragt. Umfänglich weist der Zahnseidestick 10 eine nutartige Vertiefung 13 auf, die zur Führung der Zahnseide 20 entlang des Zahnseidesticks 10 ausgebildet ist. Die Vertiefung 13 verläuft über die beiden Arme 14, welche die Ausnehmung 11 begrenzen bzw. definieren. In einer Seitenansicht ist die Ausnehmung 11 etwa halbkreisförmig und die Arme 14 entsprechend etwa U- oder halbkreis-ringförmig ausgebildet. Dabei spannen die Arme 14 eine Ebene der Ausnehmung 11 auf, welche quer zu der Ebene liegt, die durch den restlichen Zahnseidestick 10 ausgebildet wird. Zur Umlenkung der Zahnseide 20 im bespannten Zustand weist der Zahnseidestick 10 zumindest eine weitere Nut 15 auf. In einer weiteren Ausführungsform weist der Zahnseidestick 10 zwei Nuten 15 auf. Bevorzugt liegt die weitere Nut 15 ergänzend oder alternativ gespiegelt auf der anderen Seite des Zahnseidesticks von einer gedachten Längsachse in Verlängerung zu dem restlichen Zahnseidestick, d.h. ohne den Bereich der Ausnehmung 11 bzw. der Arme 14. Auf diese Art ist eine Ausführung sowohl für Links- als auch für Rechtshänder realisierbar. Der Zahnseidestick 10 weist in der Ebene, die durch den restlichen Zahnseidestick 10 ohne den Bereich der Arme 14 gebildet wird, eine Körperverbreiterung 16 auf. Diese Verbreiterung 16 ist für ein Zusammenwirken mit der Klemmeinrichtung 50 ausgebildet. In der Verbreiterung 16 ist eine Durchgangsöffnung 17 vorgesehen. Diese dient zum Durchstecken des Schraubenschafts 51b. Auf der Verbreiterung 16 wird die Handhabe 52 derart angeordnet, dass die Aufnahmeöffnung 52a der Handhabe 52 fluchtend mit der Durchgangsöffnung 17 ausgerichtet ist. Auf der Unterseite des Zahnseidesticks 10, genauer der Verbreiterung 16 wird die Mutter 53 angeordnet. Die Mutter 53 wird derart angeordnet, dass die Durchgangsöffnung der Mutter 53 mit der Durchgangsöffnung 17 der Verbreiterung 16 fluchtet. An dem Ende 12 weist der Zahnseidestick 10 das zweite Verbindungsmittel 42 in Form eines kreiszylindrischen Vorsprungs auf. Dieses ist für die Steckverbindung 40 mit korrespondierenden, insbesondere komplementären ersten Verbindungsmitteln 41 des Zahnseidespenders 30 ausgebildet. Das erste Verbindungsmittel 41 oder auch die ersten Verbindungsmittel 41 umfasst/umfassen neben dem zu dem zweiten Verbindungsmittel 42 korrespondierenden, insbesondere komplementären erste Verbindungsmittel 41, hier in Form einer kreiszylindrischen Ausnehmung, eine weitere Ausnehmung auf, die korrespondierend, insbesondere komplementär zu dem an die zweiten Verbindungsmittel 42 angrenzenden Abschnitt des Zahnseidesticks 10 ausgebildet ist. Bei einer Steckverbindung werden die ersten und zweiten Verbindungsmittel 41 und 42 in Eingriff gebracht. Dabei greift der benachbart zu den zweiten Verbindungsmitteln 42 angrenzende Abschnitt des Zahnseidesticks 10 in die Ausnehmung ein. Hierdurch ist eine Verdrehsicherheit des Zahnseidesticks 10 relativ zu dem Zahnseidespender 30 gewährleistet.

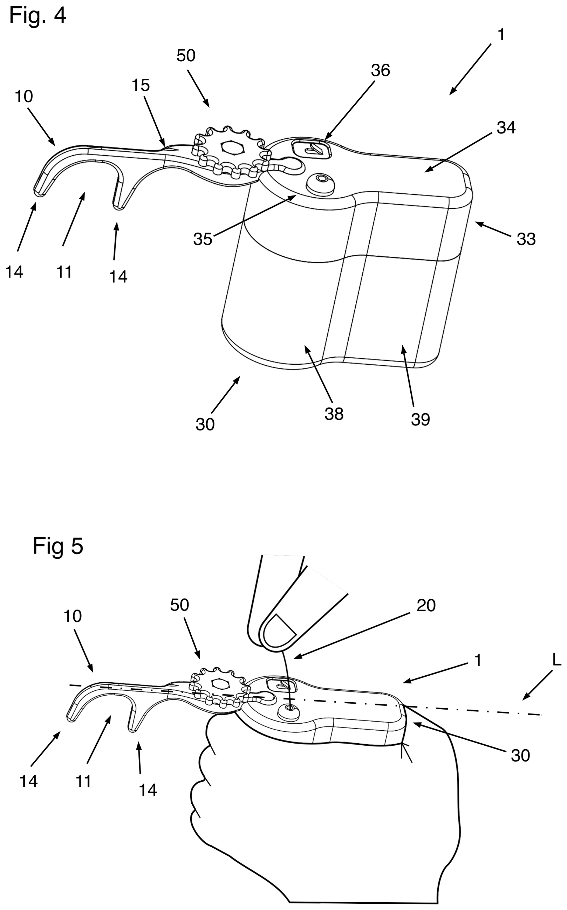

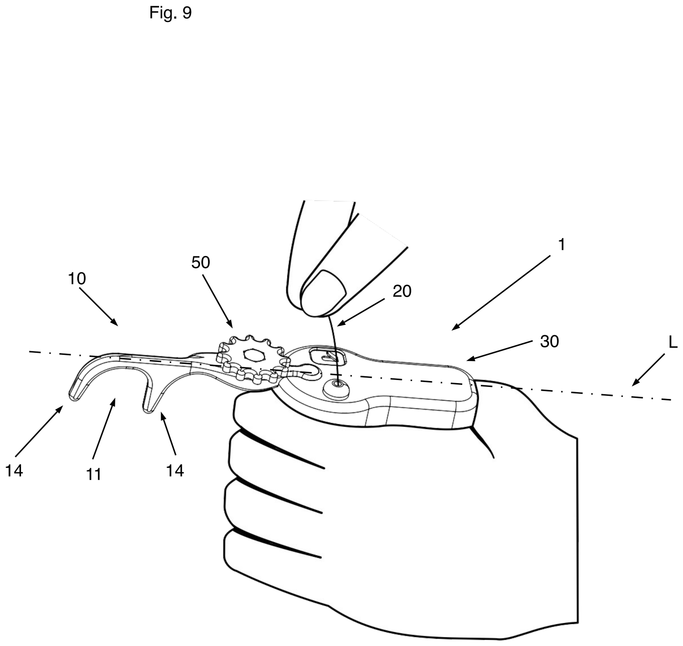

Der Zahnseidespender 30 weist zur Aufnahme des Zahnseidesticks 10 und/oder der Zahnseide 20 den Innenraum 31 auf. Dieser wird durch den Gehäusegrundkörper 32 und die Deckeleinrichtung 33 gebildet. Der Gehäusegrundkörper 32 weist eine Bodeneinheit auf, von der vollumfänglich, quer dazu, die Wandung 61 abragt. Auf diese Weise ist ein topfförmiger Gehäusegrundkörper 32 realisiert. Verschlossen wird der Innenraum 31 über die Deckeleinrichtung 33, welche eine Deckeleinheit und ebenfalls eine vollumfänglich quer dazu abragende Wandung 61 aufweist. Die Wandungen 61 des Gehäusegrundkörpers 32 und der Deckeleinrichtung 33 sind im geschlossenen, das heißt verbundenen Zustand, bündig ausgerichtet. Für eine bündige Verbindung von Deckeleinrichtung 33 und Gehäusegrundkörper 32 weist die Wandung 61 des Gehäusegrundkörpers 32 einen Absatz 62 auf, sodass ein Teil der Wandung 61 ab dem Absatz 62 ein - gegenüber der verbleibenden Wandung 61 in Richtung zusammenwirkende Kontaktfläche mit der komplementären Wandung 61 - geringeres Abmaß, hier einen geringeren Außendurchmesser auf. Auf diese Weise lässt sich die komplementäre Wandung 61 der Deckeleinrichtung 33 auf die zurückgesetzte Wandung 61 des Gehäusegrundkörpers 32 aufsetzen und schlägt an dem Absatz 62 an. Die verbleibende, nicht zurückgesetzte Wandung 61 des Zahnseidespenders 32 weist im Wesentlichen das gleiche äußere Abmaß wie die komplementäre Wandung 61 der Deckeleinrichtung 33 auf. Die zurückgesetzte Wandung 61 des Zahnseidespenders 32 weist im Wesentlichen das gleiche äußere Abmaß wie das innere Abmaß der komplementären Wandung 61 der Deckeleinrichtung 33 auf. Der Querschnitt des Zahnseidespenders 30 ist in der Draufsicht etwas wie eine 8 oder ein Schließzylinder geformt. Damit ist der Zahnseidespender 30 als eine Art Pistolengriff ausgebildet, welcher die zwei unterschiedlichen Abschnitte für ein ergonomisches Greifen aufweist (siehe Fig. 5 und 9). Der Pistolengriff ist derart zu verstehen, dass er einen Griff zu dem länglichen Zahnseidestick 10 quer (Fig. 5) oder längs (Fig. 9) zu dessen Haupterstreckungsrichtung L bildet. Ähnlich wie bei einer Pistole ragt der Griff aus der Haupterstreckungsrichtung L ab und ermöglicht einen entsprechenden Griff durch einen Benutzer. Der Griff ragt derart ab, dass der Zahnseidestick 10 quer (Fig. 5) oder längs (Fig. 9) zu einer Verlängerung des Arms bzw. in Verlängerung zu dem Arm eines greifenden Nutzers, zum Beispiel entlang der Haupterstreckungsrichtung L ragt. Der nach Art eines Pistolengriffs ausgebildete Zahnseidespender 30 weist für ein ergonomisches Greifen die zwei unterschiedlichen Abschnitte oder Bereiche 38 und 39 auf. Der Zahnseidespender 30 weist somit etwa zwei ineinander übergehende, sich teilweise überlappende Hohlzylinder mit kreisförmigem bzw. langlochartigem Querschnitt auf. Die Durchmesser der jeweiligen Hohlzylinder sind bevorzugt unterschiedlich ausgebildet, insbesondere der jeweilige Außendurchmesser.

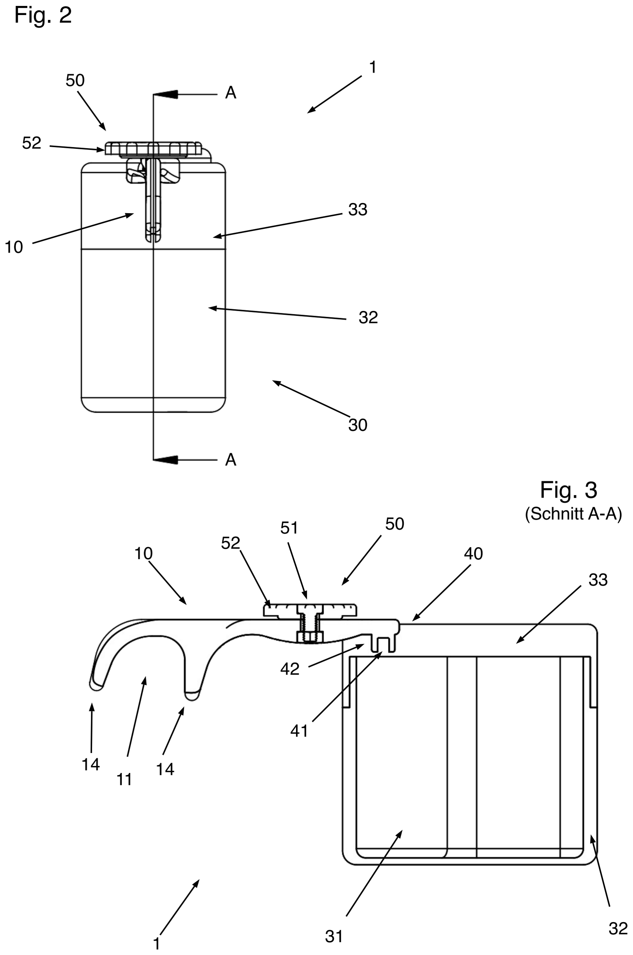

Fig. 2 zeigt eine Ausführungsform der Zahnseidevorrichtung 1 im zusammengesteckten Zustand in einer Vorderansicht. In der Vorderansicht ist der bündige Abschluss von Deckeleinrichtung 33 und Gehäusegrundkörper 32 zu erkennen. Der Zahnseidestick 10 ragt etwa mittig von der Deckeleinrichtung 33 ab. Die Handhabe 52 der Klemmeinrichtung 50 ist auf dem Zahnseidestick 10 angeordnet. Der Zahnseidespender 30 ragt von einer anderen Seite des Zahnseidesticks 10 als die Handhabe 52 ab.

Fig. 3 zeigt den Schnitt A-A der Ausführungsform nach Fig. 2. Das zweite Verbindungsmittel 42 ist hier als kreisringförmiger Vorsprung ausgebildet. Das erste Verbindungsmittel 41 ist hierzu komplementär ausgebildet mit einer kreisringförmigen Ausnehmung.

Fig. 4 zeigt die Ausführungsform nach Fig. 3 in einer Perspektivansicht. Die Zuschneideeinheit 36 ist als scharfkantiges, gebogenes Blechteil ausgebildet. Dieses ist in eine korrespondierende Aufnahmeöffnung an der Außenseite 34 der Deckeleinrichtung 33 angeordnet. Der Zahnseidestick 10 weist benachbart zu der Klemmeinrichtung 50 die Führungsnut 15 auf.

Fig. 5 zeigt den Beginn eines Bespannvorgangs. Nachdem der Zahnseidestick 10 auf den Zahnseidespender 30 aufgesteckt ist, wird die Zahnseide 20 durch die Durchgangsöffnung 35 herausgezogen. Die Zahnseide 20 wird dann um die Klemmeinrichtung 50 und entlang der Nut 15 umfänglich um den Zahnseidestick 10 über dessen Arme 14 und wieder um die Klemmeinrichtung 50 geführt.

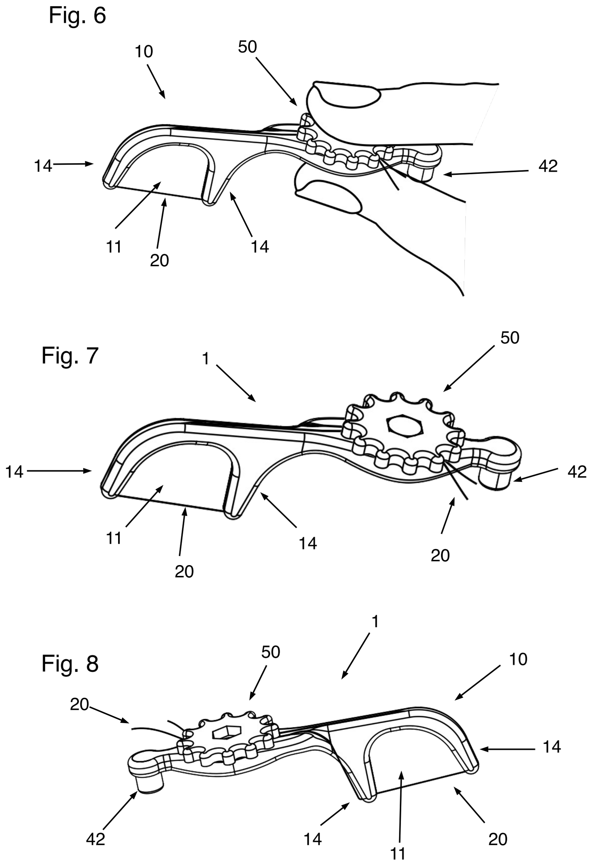

Fig. 6 zeigt den bespannten Zahnseidestick 10 in einem Verwendungszustand. Der Zahnseidestick 10 ist von dem Zahnseidespender 30 entfernt. Die Zahnseide 20 ist mit der Klemmeinrichtung 50 an dem Zahnseidestick 10 geklemmt und/oder gespannt. Die Zahnseide 20 des Zahnseidesticks 10 ist von dem an dem Zahnseidespender 30 verbleibenden Rest der Zahnseide 20 mit der Zuschneideeinheit 36 abgetrennt. Die Zahnseide 20 überspannt durch die Führung über die beiden Arme 14 die Ausnehmung 11. Dieser Zustand ist auch in Fig. 7 dargestellt (zur besseren Übersicht ohne die Finger eines Benutzers).

Fig. 8 zeigt den bespannten Zustand nach Fig. 6 und 7 in einer anderen Perspektivansicht. Die Zahnseide 20 ist mit beiden Enden auf der gleichen Seite der Klemmeinrichtung 50 an dieser geklemmt.

Fig. 9 zeigt wie Fig. 5 den Beginn eines Bespannvorgangs, allerdings mit einer anderen Griffhaltung. In Fig. 5 hält der Benutzer den Griff quer zu dessen Haupterstreckungsrichtung L. In Fig. 9 hält der Benutzer den Griff längs zu dessen Haupterstreckungsrichtung L. Nachdem der Zahnseidestick 10 auf den Zahnseidespender 30 aufgesteckt ist, wird die Zahnseide 20 durch die Durchgangsöffnung 35 herausgezogen. Die Zahnseide 20 wird dann um die Klemmeinrichtung 50 und entlang der Nut 15 umfänglich um den Zahnseidestick 10 über dessen Arme 14 und wieder um die Klemmeinrichtung 50 geführt.

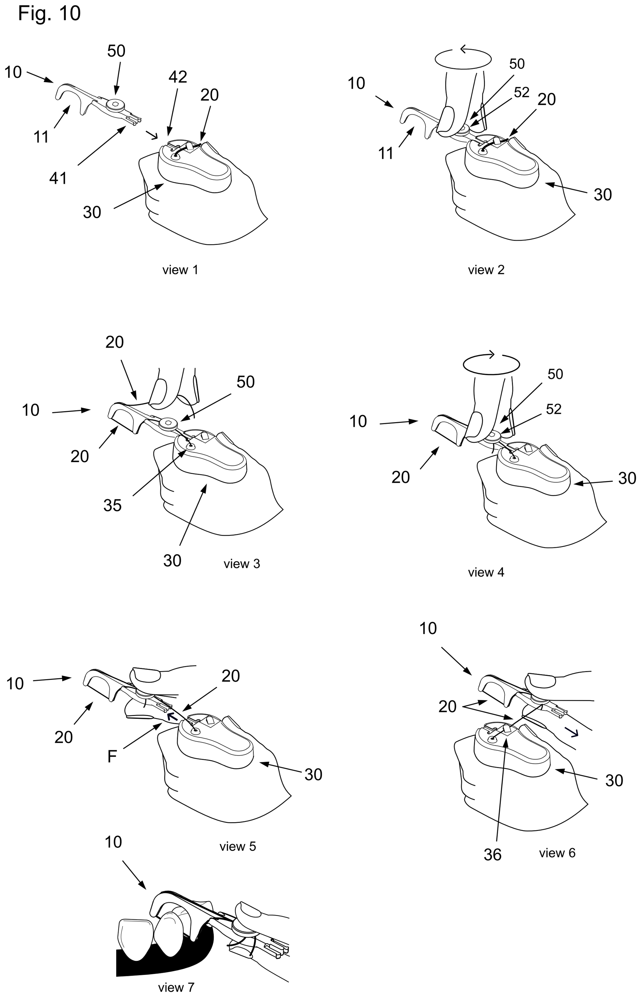

Fig. 10 zeigt schematisch einen Vorgang zum Zusammenbau eines Zahnseidesticks 10 und Reinigen von Zahnzwischenräumen mit einer anderen Ausführungsform einer Zahnseidevorrichtung 1 in Perspektivansichten. In der ersten Teilansicht wird der separate Zahnseidestick 10 mit den ersten Verbindungsmitteln 41 voran in Richtung der zweiten Verbindungsmittel 42 des Zahnseidespenders 30 bewegt. Der Zahnseidespender wird einhändig von einem Benutzer gehalten. In der zweiten Teilansicht wird der Zahnseidestick 10 mit dem Zahnseidespender 30 verbunden, in dem die Verbindungsmittel 41 und 42 in Eingriff miteinander gebracht werden. Der Zahnseidestick 10 ist in den ersten beiden Teilansichten unbespannt, das heißt nicht mit einer Zahnseide umgeben. Während der Benutzer einhändig den Zahnseidespender 30 hält, betätigt der Benutzer mit der anderen Hand die Klemmeinrichtung 50. Im dargestellten Ausführungsbeispiel dreht der Benutzer eine Handhabe 52 der Klemmeinrichtung 50, um einen Spalt zwischen der Klemmeinrichtung 50 und dem Zahnseidestick 10 zu realisieren. Der Zahnseidestick 10 ist in der Teilansicht über die Verbindungsmittel 41 und 42 mit dem Zahnseidespender 30 verbunden. In der dritten Teilansicht wird die Zahnseide 20 um den Zahnseidestick 10 geführt und der Zahnseidestick 10 bespannt. Hierbei führt der Benutzer die Zahnseide 20 um den Zahnseidestick 10 über die Ausnehmung 11 herum und mit einem Ende und einem aus dem Zahnseidespender 30 herausragenden Teil durch den gebildeten Spalt zwischen Klemmeinrichtung 50 und Zahnseidestick 10. In der Teilansicht 4 wird dann die Klemmeinrichtung 50 durch die zweite Hand des Benutzers betätigt und damit die Zahnseide 20 geklemmt und gespannt. Nach dem Klemmen und/oder Spannen der Zahnseide 20 wird der Zahnseidestick 10 von dem Zahnseidespender 30 getrennt, wie in der nächsten Teilansicht zu sehen. Hierbei wird ein Teil der in dem Zahnseidespender 30 bevorrateten Zahnseide 20 aus dem Zahnseidespender 30 herausgezogen. In einem nächsten Schritt, wie in der folgenden Teilansicht zu erkennen, wird die Zahnseide 20, die sich zwischen dem Zahnseidespender 30 und dem Zahnseidestick 10 befindet, von der restlichen, überwiegend in dem Zahnseidespender 30 befindlichen Zahnseide 10 getrennt. Hierzu wird der entsprechende Teil der Zahnseide 20 mit der Zuschneideeinheit 36 in Eingriff gebracht und dabei durchtrennt. Der bespannte Zahnseidestick 10 kann nun frei beweglich für ein Reinigen von Zahnzwischenräumen, wie in der letzten Teilansicht zu sehen, genutzt werden.

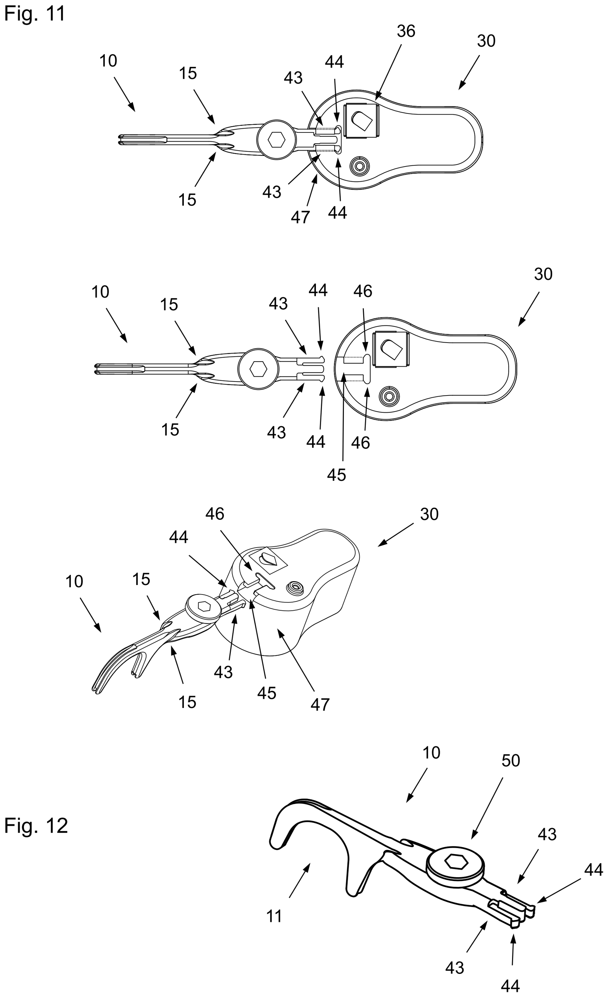

Fig. 11 zeigt schematisch einen Verbindungs- bzw. Lösevorgang einer Ausführungsform eines Zahnseidesticks 10 von einer Ausführungsform eines Zahnseidespenders 30 in verschiedenen Ansichten. In der ersten Ansicht ist der Zahnseidestick 10 über die Verbindungsmittel 41 und 42 mit dem Zahnseidespender 30 verbunden. Die ersten Verbindungsmittel sind als zwei federnde Vorsprünge 43 ausgebildet, die an ihren Enden jeweils einen von dem jeweils anderen Vorsprung 43 abragenden Haken 44 aufweisen. Die Vorsprünge 43 sind durch eine entsprechende Vertiefung 45 in dem Zahnseidespender 30 geführt. Die endseitigen Haken 44 greifen in komplementäre seitliche Ausformungen 46 ein. Um den Zahnseidestick 10 von dem Zahnseidespender 30 zu lösen, wird eine Initialkraft F aufgebracht, mit welcher die federnden Vorsprünge 43 samt Haken 44 etwas zusammengedrückt werden, sodass sich der Zahnseidestick 10 von dem Zahnseidespender 30 trennen lässt. Dieser Vorgang ist in der zweiten Teilansicht dargestellt. Die dritte Teilansicht zeigt den Zahnseidestick 10 und den davon getrennten und beabstandeten Zahnseidespender 30 in einer perspektivischen Ansicht. Hierbei ist die Vertiefung 45 an der Oberseite O des Zahnseidespenders 30, die in die Seitenwandung 47 des Zahnseidespenders 30 hereinragt, gut zu erkennen. Die Vertiefung 45 ist etwa T-förmig mit den endseitigen Ausnehmungen 46 ausgebildet. Die Ausnehmungen 46 bilden eine Art Hinterschnitt, in welche die Haken 44 im verbundenen Zustand eingreifen.

Fig. 12 zeigt schematisch in einer Perspektivansicht einen von einem Zahnseidespender 30 gelösten Zahnseidestick 10. Deutlich sind die beiden Vorsprünge 43 sowie die endseitigen Haken 44 zu erkennen.

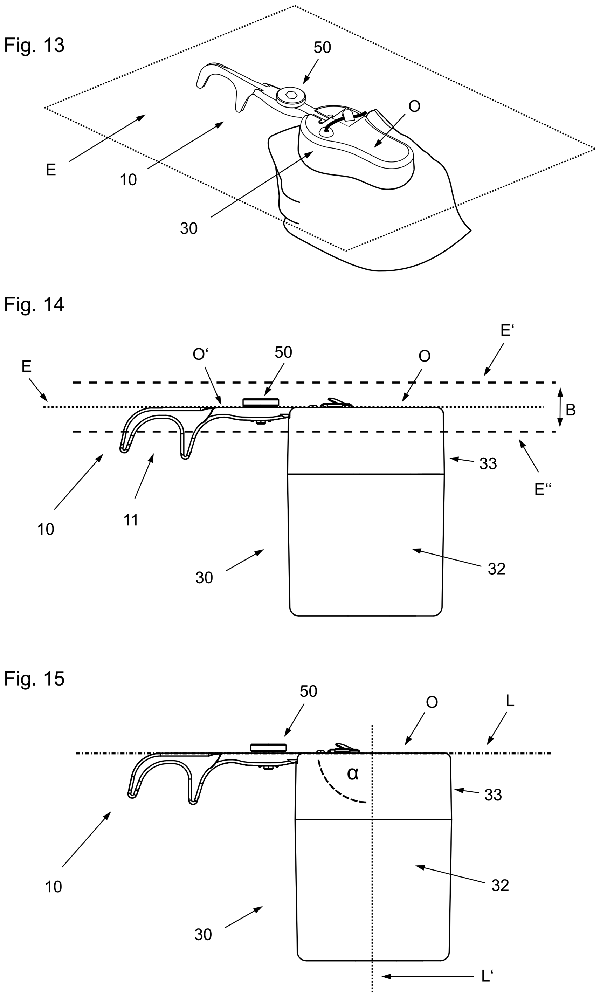

Fig. 13 zeigt schematisch in einer Perspektivansicht eine von der Oberseite O des Zahnseidespenders 30 aufgespannte Ebene E bei einem Halten einer Ausführungsform einer Zahnseidevorrichtung 1. In der Ebene E verläuft die Oberseite O des Zahnseidespenders.

Fig. 14 zeigt schematisch in einer Seitenansicht eine Ausführungsform einer Zahnseidevorrichtung 1 mit einer von der Oberseite O aufgespannten Ebene E bzw. der parallel versetzt dazu liegenden Ebenen E' und E". In der Ebene E liegt bündig eine Oberseite des Zahnseidesticks 10. Die Klemmung der Zahnseide 20 erfolgt in dieser Ebene zwischen Klemmeinrichtung 50 und Oberfläche O'. Die Klemmung der Zahnseide 20 kann aber auch leicht versetzt zu der Ebene E in einer parallel dazu versetzten Ebene E' (oder E"), also in einem Bereich B zwischen den Ebenen E' und E" erfolgen. Der Versatz der Ebene E zu der Ebene E' oder auch der Bereich B liegt in einem Toleranzbereich, der im Bereich von größer gleich 0 mm bis kleiner gleich 10 mm liegen kann. Die Oberseite des Zahnseidesticks 10 ist hierbei etwas versetzt zu der Oberseite O des Zahnseidespenders 30 angeordnet. Die Zahnseidevorrichtung 1 ist also so ausgebildet, dass im verbundenen Zustand eine Oberfläche O' des Zahnseidesticks 10 und die Oberfläche O des Zahnseidespenders 30 in einem Bereich B liegen, welcher durch die zu der Ebene E parallelen Ebenen Ebene E" und Ebene E' begrenzt wird, wobei die Ebene E' maximal 5 mm, bevorzugt maximal 3mm entfernt von der Ebene E liegt und die Ebene E" maximal 5 mm, bevorzugt maximal 3 mm auf der gegenüberliegenden Seite der Ebene E von dieser entfernt liegt.

Fig. 15 zeigt schematisch in einer Seitenansicht eine Ausführungsform einer Zahnseidevorrichtung 1 mit einer durch den Gehäusegrundkörper 32 und Deckeleinrichtung 33 verlaufenden Längsachse L' und einer durch den Zahnseidestick 10 verlaufenden Haupterstreckungsrichtung L, welche den Winkel α zwischen sich in der Seitenansicht aufspannen. Der durch die Längsachse L' und Haupterstreckungsrichtung L gebildete Winkel α ist vorzugsweise größer gleich 70°, größer gleich 75° und am meisten bevorzugt größer gleich 80° und vorzugsweise kleiner als 110°, weiter bevorzugt kleiner als 100° und am meisten bevorzugt kleiner gleich 95°.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste

- 1: Zahnseidevorrichtung
- 10: Zahnseidestick
- 11: Ausnehmung
- 12: Ende
- 13: Vertiefung
- 14: Arm
- 15: Nut
- 16: Körperverbreiterung
- 20: Zahnseide
- 30: Zahnseidespender
- 31: Innenraum
- 32: Gehäusegrundkörper
- 33: Deckeleinrichtung
- 34: Außenseite
- 35: Durchgangsöffnung
- 36: Zuschneideeinheit
- 37: Pistolengriff
- 38: erster Bereich
- 39: zweiter Bereich
- 40: Steckverbindung
- 41: erste Verbindungsmittel
- 42: zweite Verbindungsmittel
- 43: Vorsprung
- 44: Haken
- 45: Vertiefung
- 46: Ausformung
- 47: Seitenwandung
- 50: Klemmeinrichtung
- 51: Schraube
- 51a: Schraubenkopf
- 51b: Schraubenschaft
- 52: Handhabe
- 52a: Aufnahmeöffnung
- 53: Mutter
- 61: Wandung
- 62: Absatz
- B: Bereich
- E: Ebene
- E': Ebene (versetzt)
- E": Ebene (versetzt)
- F: Initialkraft
- L: Haupterstreckungsrichtung
- L': Längsachse (Bodeneinheit / Deckeleinheit)
- *α*: Winkel zwischen L und L'
- O: Oberfläche / Oberseite ( Zahnseidespender)
- O': Oberfläche / Oberseite (Zahnseidestick)

## Patentansprüche

1. Verfahren zum Bespannen einer Zahnseidevorrichtung (1), insbesondere eines Zahnseidesticks (10) einer Zahnseidevorrichtung (1), mit Zahnseide (20), insbesondere einer Zahnseidevorrichtung (1) nach einem der Ansprüche 6 bis 15, umfassend die Schritte:
Vorsehen eines Zahnseidespenders (30), insbesondere eines mit Zahnseide (20) gefüllten Zahnseidespenders (30),
Vorsehen eines zum Führen von Zahnseide (20) geeigneten Zahnseidesticks (10), Führen der Zahnseide (20) aus dem Zahnseidespender (30) um den Zahnseidestick (10), Klemmen und/oder Spannen der Zahnseide (20) an dem Zahnseidestick (10) und Zuschneiden der Zahnseide (20), sodass die Zahnseide (20) mit dem Zahnseidestick (10) getrennt von dem Zahnseidespender (30) verwendbar ist,
**dadurch gekennzeichnet, dass**
der Zahnseidestick (10) vor dem Führen der Zahnseide (20) mit dem Zahnseidespender (30) lösbar, insbesondere sicherungsmittelfrei lösbar verbunden wird, insbesondere über ein Steckverbindung verbunden wird, und für eine Verwendung des Zahnseidesticks (10) mit der geklemmten Zahnseide (20) der Zahnseidestick (10), insbesondere nach dem Klemmen, insbesondere vor dem Zuschneiden, von dem Zahnseidespender (30) gelöst wird.

2. Verfahren nach Anspruch 1, **dadurch gekennzeichnet, dass** das Lösen nach dem Klemmen und/oder Spannen, insbesondere vor dem Zuschneiden durchgeführt wird.

3. Verfahren nach einem der vorherigen Ansprüche, **dadurch gekennzeichnet, dass**
das Klemmen und/oder Spannen über eine an dem Zahnseidestick (10) vorgesehene Klemmeinrichtung (50) erfolgt, wobei die Klemmeinrichtung (50) vor dem Führen gelöst wird und nach dem Führen geklemmt wird.

4. Verfahren nach einem der vorherigen Ansprüche, **dadurch gekennzeichnet, dass**
für das Klemmen und/oder Spannen die Zahnseide (20) zu und weg von dem Zahnseidespender (30) auf der gleichen Seite der Klemmeinrichtung (50) entlanggeführt wird und dann geklemmt wird.

5. Verfahren nach einem der vorherigen Ansprüche, **dadurch gekennzeichnet, dass** das Klemmen der Zahnseide (20) zwischen Klemmeinrichtung (50) und Zahnseidestick (10) auf einer von dem Zahnseidespender (30) abgewandten Seite durchgeführt wird, sodass eine Klemmung auch bei von dem Zahnseidespender (30) wegbewegten Zahnseidestick (10) aufrecht gehalten wird.

6. Zahnseidevorrichtung (1), insbesondere eine Zahnseidevorrichtung (1) zum Reinigen von Zahnzwischenräumen, insbesondere mit Mitteln zum Durchführen eines Verfahrens nach einem der vorherigen Ansprüche 1 bis 5, umfassend einen Zahnseidestick (10), über den eine Zahnseide (20) führbar und/oder geführt ist, wobei die Zahnseide (20) in einem bespannten Zustand eine Ausnehmung (11) des Zahnseidesticks (10) überspannt,
einen Zahnseidespender (30) mit einem Innenraum (31), wobei in dem Innenraum (31) die Zahnseide (20) bevorratbar und/oder bevorratet ist und/oder in dem der Zahnseidestick (10) bevorratbar und/oder bevorratet ist, **dadurch gekennzeichnet, dass**
der Zahnseidestick (10) mit dem Zahnseidespender (30) über eine Steckverbindung (40) lösbar, insbesondere sicherungsmittelfrei lösbar, verbindbar und/oder verbunden ist.

7. Zahnseidevorrichtung (1) nach Anspruch 6, **dadurch gekennzeichnet, dass**
der Zahnseidespender (30) mit einem Gehäusegrundkörper (32) und einer von diesem abnehmbare Deckeleinrichtung (33) zum Öffnen und/oder Verschließen des von dem Gehäusegrundkörper (32) und der Deckeleinrichtung (33) gebildeten Innenraums (31) ausgebildet ist.

8. Zahnseidevorrichtung (1) nach Anspruch 6 oder 7, **dadurch gekennzeichnet, dass**
die Deckeleinrichtung (33) an der dem Gehäusegrundkörper (32) abgewandten Außenseite (34) ein erstes Verbindungsmittel (41) aufweist, welches komplementär zu einem mit dem ersten Verbindungsmittel (41) für ein lösbares Zusammenwirken, insbesondere einem sicherungsmittelfreien lösbaren Zusammenwirken, vorgesehenen zweiten Verbindungsmittel (42) des Zahnseidesticks (10) ausgebildet ist.

9. Zahnseidevorrichtung (1) nach einem der Ansprüche 6 bis 8, **dadurch gekennzeichnet, dass**
der Zahnseidestick (10) an seinem entfernt zu der Ausnehmung (11) angeordneten Ende (12) das zweite Verbindungsmittel (42) aufweist, welches komplementär zu dem ersten Verbindungsmittel (41) für ein Zusammenwirken, insbesondere ein sicherungsmittelfreies Zusammenwirken, mit dem ersten Verbindungsmittel (41), ausgebildet ist.

10. Zahnseidevorrichtung (1) nach einem der Ansprüche 6 bis 9, **dadurch gekennzeichnet, dass**
die Deckeleinrichtung (33) an der dem Gehäusegrundkörper (32) abgewandten Außenseite (34) eine Durchgangsöffnung (35) und/oder eine Zuschneideeinheit (36) aufweist, um Zahnseide aus dem Innenraum (31) des Zahnseidespenders (30) herauszuführen bzw. von der in dem Innenraum (31) verbleibenden restlichen Zahnseide (20) zu trennen.

11. Zahnseidevorrichtung (1) nach einem der Ansprüche 6 bis 10, **dadurch gekennzeichnet, dass**
der Zahnseidespender (30) als eine Art Pistolengriff (37) ausgebildet ist, welcher zwei unterschiedliche Abschnitte (38, 39) für ein ergonomisches Greifen aufweist.

12. Zahnseidevorrichtung (1) nach einem der Ansprüche 6 bis 11, **dadurch gekennzeichnet, dass**
eine Klemmeinrichtung (50) an dem Zahnseidestick (10) zum Klemmen der Zahnseide (20) zwischen Klemmeinrichtung (50) und Zahnseidestick (10) auf der dem Zahnseidespender (30) abgewandten Seite vorgesehen ist.

13. Zahnseidevorrichtung (1) nach einem der vorherigen Ansprüche 6 bis 12, **dadurch gekennzeichnet, dass**
ein Käfig und/oder eine Kapselung für die Aufnahme der Zahnseide in dem Innenraum (31) des Zahnseidespenders (30) vorgesehen ist.

14. Zahnseidevorrichtung (1) nach einem der vorherigen Ansprüche 6 bis 13, **dadurch gekennzeichnet, dass**
ein Arm (14) der die Ausnehmung (11) des Zahnseidesticks (10) definierenden Arme (14) im zusammengesetzten Zustand näher an dem Zahnseidespender (30) angeordnet ist, als der andere.

15. Zahnseidevorrichtung (1) nach einem der vorherigen Ansprüche 6 bis 14, **dadurch gekennzeichnet, dass**
im verbundenen Zustand eine Oberfläche (O') des Zahnseidesticks (10) und die Oberfläche (O) des Zahnseidespenders (30) in einem Bereich (B) liegen, welcher durch die zu der Ebene (E) parallelen Ebenen Ebene (E") und Ebene (E') begrenzt wird, wobei die Ebene (E') maximal 5 mm, bevorzugt maximal 3mm entfernt von der Ebene (E) liegt und die Ebene (E") maximal 5 mm, bevorzugt maximal 3 mm auf der gegenüberliegenden Seite der Ebene (E) von dieser entfernt liegt.
